# NEUE EUROPÄISCHE PATENTSCHRIFT

(11) **EP 3 048 685 B3**
(45) Veröffentlichungstag dieser Patentschrift: **08.01.2020**
(45) Hinweis auf die Patenterteilung: 08.08.2018
(21) Anmeldenummer: 15151908.9
(22) Anmeldetag: 21.01.2015
(51) Int. Cl.: H02H 3/33

(54) **Fehlerstromschutzeinrichtung und Verfahren zum Schalten von Schaltkontakten der Fehlerstromschutzeinrichtung**
Fault-current protection device and method for switching switch contacts of the fault-current protection device
Dispositif de protection de courant de fuite et procédé de commutation de contacts de commutation du dispositif de protection de courant de fuite

(43) Veröffentlichungstag der Anmeldung: 27.07.2016
(73) Patentinhaber: PC Electric Ges.m.b.H., 4973 St. Martin i.I. (AT)
(72) Erfinder: Irsigler, Thomas, 4780 Schärding (AT); Froschauer, Josef, 4780 Schärding (AT)
(74) Vertreter: KLIMENT & HENHAPEL

(56) Entgegenhaltungen:
- GB-A- 2 377 834
- US-A1- 2014 254 050

## Beschreibung

### GEBIET DER ERFINDUNG

Die vorliegende Erfindung betrifft eine Fehlerstromschutzeinrichtung zur Erkennung von Fehlerströmen in einem Niederspannungsnetz mit einem Schutzleiter, einem Nullleiter und mindestens einem Phasenleiter, die Fehlerstromschutzeinrichtung umfassend einen Schutzleiter zur elektrischen Verbindung mit dem Schutzleiter des Niederspannungsnetzes, einen Nullleiter zur elektrischen Verbindung mit dem Nullleiter des Niederspannungsnetzes und mindestens einen Phasenleiter zur elektrischen Verbindung mit dem mindestens einen Phasenleiter des Niederspannungsnetzes, die Fehlerstromschutzeinrichtung weiters umfassend einen Schutzleiter-Schaltkontakt zur ein- und ausschaltbaren Unterbrechung des Schutzleiters der Fehlerstromschutzeinrichtung, mindestens einen Phasenleiter-Schaltkontakt zur ein-und ausschaltbaren Unterbrechung des mindestens einen Phasenleiters der Fehlerstromschutzeinrichtung und einen Nullleiter-Schaltkontakt zur ein- und ausschaltbaren Unterbrechung des Nullleiters der Fehlerstromschutzeinrichtung, wobei mindestens ein Schaltmittel vorgesehen ist, um die Schaltkontakte zu schalten, wobei der Schutzleiter-Schaltkontakt unabhängig vom Nullleiter-Schaltkontakt und vom mindestens einen Phasenleiter-Schaltkontakt schaltbar ist.

Weiters betrifft die vorliegende Erfindung ein Verfahren zum Schalten von mindestens einem Phasenleiter-Schaltkontakt, einem Nullleiter-Schaltkontakt und einem Schutzleiter-Schaltkontakt einer Fehlerstromschutzeinrichtung zur Erkennung von Fehlerströmen in einem Niederspannungsnetz mit einem Schutzleiter, einem Nullleiter und mindestens einem Phasenleiter, die Fehlerstromschutzeinrichtung umfassend einen Schutzleiter zur elektrischen Verbindung mit dem Schutzleiter des Niederspannungsnetzes, einen Nullleiter zur elektrischen Verbindung mit dem Nullleiter des Niederspannungsnetzes und mindestens einen Phasenleiter zur elektrischen Verbindung mit dem mindestens einen Phasenleiter des Niederspannungsnetzes, wobei der Schutzleiter-Schaltkontakt zur ein- und ausschaltbaren Unterbrechung des Schutzleiters der Fehlerstromschutzeinrichtung vorgesehen ist, wobei der mindestens eine Phasenleiter-Schaltkontakt zur ein- und ausschaltbaren Unterbrechung des mindestens einen Phasenleiters der Fehlerstromschutzeinrichtung vorgesehen ist und wobei der Nullleiter-Schaltkontakt zur ein- und ausschaltbaren Unterbrechung des Nullleiters der Fehlerstromschutzeinrichtung vorgesehen ist, wobei der Schutzleiter-Schaltkontakt unabhängig vom Nullleiter-Schaltkontakt und vom mindestens einen Phasenleiter-Schaltkontakt geschaltet wird.

### STAND DER TECHNIK

Den sicheren Betrieb von elektrischen Betriebsmitteln, insbesondere von Elektrowerkzeugen bei Bau- und Montagearbeiten zu gewährleisten, ist eine Herausforderung, da insbesondere bei Baustellen fehlerhafte Elektroinstallationen nicht auszuschließen sind. Um die Sicherheit von Benutzern der elektrischen Betriebsmittel zu erhöhen, wird daher eine ortsveränderliche Fehlerstromschutzeinrichtung (manchmal auch als "portable residual current device" oder einfach als "PRCD" bezeichnet) an das über die vorhandenen Elektroinstallationen zur Verfügung gestellte Niederspannungsnetz angeschlossen. Die elektrischen Betriebsmittel, insbesondere Elektrowerkzeuge werden dann an die ortsveränderliche Fehlerstromschutzeinrichtung - und nicht direkt an das Niederspannungsnetz - angeschlossen. Grundsätzlich sind aber natürlich auch bei fertiggestellten Elektroinstallationen zur Bereitstellung eines Niederspannungsnetzes Fehlerstromschutzeinrichtungen vorzusehen. Unter Niederspannungsnetz wird dabei ein Wechselstromnetz mit einer effektiven Spannung von typischerweise 130 V bis 1000 V, insbesondere von 230 V bis 400 V verstanden.

Bei herkömmlichen PRCD werden stets sämtliche Leitungen, d.h. Schutzleiter, Nullleiter und mindestens ein Phasenleiter, geschaltet, was üblicherweise über eine einteilige Schaltbrücke erfolgt. D.h. es werden nicht nur die für die Stromführung vorgesehenen Leitungen elektrisch unterbrochen, sondern auch der Schutzleiter, was sich im Hinblick aufden Schutz von Personen, die mit am PRCD angeschlossenen Geräten arbeiten bzw. in Berührung kommen, als nachteilig erweisen kann. Beispielsweise hat dann ein Gehäuse eines Geräts der Schutzklasse I keine elektrische Verbindung mehr mit dem Schutzleiter, was sich als gefährlich erweisen kann, wenn dieses Gerät mit seinem Gehäuse in Kontakt mit einem spannungsführenden Fremdleiter kommt. Ein Beispiel hierfür wäre etwa eine Bohrmaschine mit einem elektrisch leitenden (Metall-)Gehäuse, mitwelcher Bohrmaschine eine fremde Stromleitung angebohrt wird.

Zwar sind, insbesondere bei Festinstallationen auch Fehlerstromschutzeinrichtungen bekannt, bei denen der Schutzleiter überhaupt nicht geschaltet wird, sondern nur der Nullleiter und der mindestens eine Phasenleiter. Dies ist jedoch ebenfalls als nachteilig zu bewerten, da, insbesondere bei fehlerhafter Installation, auch am Schutzleiter Fehlerspannungen auftreten können.

Aus der US 2014/254050 A1 ist eine gattungsgemäße Fehlerstromschutzeinrichtung bekannt, wobei ein Schutzleiter auf eine mögliche Unterbrechung hin mittels einer Überwachungsvorrichtung überwacht wird. Falls ein derartiger Fehlerzustand detektiert wird, wird die Stromversorgung zur Last hin unterbrochen. In Abhängigkeit vom detektierten Fehlerstrom werden Schaltkontakte für den Phasenleiter und den Neutralleiter der Einrichtung unterbrochen. Für den Schutzleiter steht ein eigener Schaltkontakt mit einem eigenen Relais zur Verfügung. Das Relais wird in Abhängigkeit des Signals der Überwachungsvorrichtung unabhängig von den Schaltkontakten betätigt.

Aus der GB 2377834 A ist lediglich ein Fehlerstromschutzschalter bekannt, bei dem mittels einer Spule Kontakte eines Phasenleiters und eines Nullleiters geschaltet werden können. Weiters ist im Schutzleiter ein Schalter vorgesehen, der ebenfalls über die Spule betätigtwird, um ein zwangsweises Öffnen des Schalters unmittelbar vor dem Öffnen des Kontakts des Nullleiters zu bewirken.

### AUFGABE DER ERFINDUNG

Es ist daher Aufgabe der vorliegenden Erfindung, eine verbesserte Fehlerstromschutzeinrichtung zur Verfügung zu stellen, die die oben genannten Nachteile vermeidet und eine höhere Sicherheit bietet.

### DARSTELLUNG DER ERFINDUNG

Diese Aufgabe wird gelöst durch eine Fehlerstromschutzeinrichtung zur Erkennung von Fehlerströmen in einem Niederspannungsnetz nach Anspruch 1 und ein Verfahren nach Anspruch 12. Um die Sicherheit bei der Benutzung von elektrischen Betriebsmitteln, die über die Fehlerstromschutzeinrichtung mit dem Niederspannungsnetz verbunden werden, weiter zu erhöhen, wird mit einer erfindungsgemäßen Fehlerstromschutzeinrichtung sichergestellt, dass beim Ausschalten sämtlicher Schaltkontakte der Schutzleiter-Schaltkontakt erst dann ausgeschaltet wird, wenn der mindestens eine Phasenleiter-Schaltkontakt und der-Nullleiter-Schaltkontakt bereits ausgeschaltet sind. Entsprechend ist es bei einer erfindungsgemäßen Fehlerstromschutzeinrichtung vorgesehen, dass die Fehlerstromschutzeinrichtung so ausgelegt ist, dass beim Ausschalten des Schutzleiter-Schaltkontakts und des Nullleiter-Schaltkontakts und/oder des mindestens einen Phasenleiter-Schaltkontakts der Schutzleiter-Schaltkontakt um eine, vorzugsweise festlegbare Verzögerungszeit verzögert gegenüber dem Nullleiter-Schaltkontakt und/oder dem mindestens einen Phasenleiter-Schaltkontakt ausgeschaltet wird. Somit kann sichergestellt werden, dass zu keinem Zeitpunkt der mindestens eine Phasenleiter-Schaltkontakt und der Nullleiter-Schaltkontakt eingeschaltet sind, ohne dass der Schutzleiter-Schaltkontakt eingeschaltet ist.

Analog ist es bei einem erfindungsgemäßen Verfahren vorgesehen, dass beim Ausschalten des Schutzleiter-Schaltkontakts und des Nullleiter-Schaltkontakts und/oder des mindestens einen Phasenleiter-Schaltkontakts der Schutzleiter-Schaltkontakt um eine, vorzugsweise festlegbare Verzögerungszeit verzögert gegenüber dem Nullleiter-Schaltkontakt und/oder dem mindestens einen Phasenleiter-Schaltkontakt ausgeschaltet wird.

Um auf unterschiedlichste Anforderungen reagieren zu können, ist es vorzugsweise vorgesehen, dass sämtliche Schaltkontakte unabhängig voneinander geschaltet werden können. Insbesondere ist es daher bei einer bevorzugten Ausführungsform der erfindungsgemäßen Fehlerstromschutzeinrichtung vorgesehen, dass der Nullleiter-Schaltkontakt unabhängig vom mindestens einen Phasenleiter-Schaltkontakt schaltbar ist.

Je nach Niederspannungsnetzwerk können ein Phasenleiter oder mehrere, insbesondere drei Phasenleiter des Niederspannungsnetzwerks vorhanden sein. Entsprechend ist es bei einer bevorzugten Ausführungsform der erfindungsgemäßen Fehlerstromschutzeinrichtung vorgesehen, dass mehrere, vorzugsweise drei Phasenleiter der Fehlerstromschutzeinrichtung und Phasenleiter-Schaltkontakte vorgesehen sind, die unabhängig voneinander schaltbar sind. Wenn also nur eine Phase gebraucht wird, lässt sich auf diese Weise gezielt nur diese eine Phase einschalten, indem der entsprechende Phasenleiter-Schaltkontakt eingeschaltet wird und die anderen Phasenleiter-Schaltkontakte ausgeschaltet werden bzw. bleiben.

Um das Schalten der einzelnen Schaltkontakte auf besonders flexible Weise zu ermöglichen, ist es bei einer bevorzugten Ausführungsform der erfindungsgemäßen Fehlerstromschutzeinrichtung vorgesehen, dass für jeden Schaltkontakt ein eigenes Schaltmittel vorgesehen ist.

Um die Sicherheit bei der Benutzung von elektrischen Betriebsmitteln, die über die Fehlerstromschutzeinrichtung mit dem Niederspannungsnetz verbunden werden, zu erhöhen, kann mit der erfindungsgemäßen Fehlerstromschutzeinrichtung sichergestellt werden, dass der mindestens eine Phasenleiter-Schaltkontakt und der Nullleiter-Schaltkontakt nur dann eingeschaltet werden, wenn der Schutzleiter-Schaltkontakt bereits eingeschaltet ist. Entsprechend ist es bei einer bevorzugten Ausführungsform der erfindungsgemäßen Fehlerstromschutzeinrichtung vorgesehen, dass die Fehlerstromschutzeinrichtung so ausgelegt ist, dass beim Einschalten des Schutzleiter-Schaltkontakts und des Nullleiter-Schaltkontakts und/oder des mindestens einen Phasenleiter-Schaltkontakts der Schutzleiter-Schaltkontakt um eine, vorzugsweise festlegbare Voreilzeit voreilend gegenüber dem Nullleiter-Schaltkontakt und/oder dem mindestens einen Phasenleiter-Schaltkontakt eingeschaltet wird.

Analog ist es bei einer bevorzugten Ausführungsform des erfindungsgemäßen Verfahrens vorgesehen, dass beim Einschalten des Schutzleiter-Schaltkontakts und des Nullleiter-Schaltkontakts und/oder des mindestens einen Phasenleiter-Schaltkontakts der Schutzleiter-Schaltkontakt um eine, vorzugsweise festlegbare Voreilzeit voreilend gegenüber dem Nullleiter-Schaltkontakt und/oder dem mindestens einen Phasenleiter-Schaltkontakt eingeschaltet wird.

In vielen Anwendungsfällen müssen der Nullleiter-Schaltkontakt und der mindestens eine Phasenleiter-Schaltkontakt nichtseparatgeschaltetwerden, esgenügt, den Schutzleiter-Schaltkontakt unabhängig von den anderen Schaltkontakten schalten zu können. Dies ermöglicht es, eine konstruktiv und herstellungstechnisch besonders einfache Ausführungsform der erfindungsgemäßen Fehlerstromschutzeinrichtung zur Verfügung zu stellen, die für viele Anwendungsfälle flexibel genug ist, indem es bei einer bevorzugten Ausführungsform der erfindungsgemäßen Fehlerstromschutzeinrichtung vorgesehen, dass die Fehlerstromschutzeinrichtung so ausgelegt ist, dass der Nullleiter-Schaltkontakt und der mindestens eine Phasenleiter-Schaltkontakt gleichzeitig geschaltet werden. In diesem Fall können der Nullleiter-Schaltkontakt und der mindestens eine Phasenleiter-Schaltkontakt z.B. nur mit einem einzigen Schaltmittel geschaltet werden, beispielsweise mit einem Relais, das eine Schaltbrücke betätigt, welche wiederum den mindestens einen Phasenleiter-Schaltkontakt und den Nullleiter-Schaltkontakt schaltet.

Allerdings kann sich bei mehrphasigen, vorzugsweise dreiphasigen Niederspannungsnetzen die zeitliche Reihenfolge des Schaltens des Nullleiters bzw. des Nullleiter-Schaltkontakts und der Phasenleiter bzw. der Phasenleiter-Schaltkontakte deutlich stärker auswirken als in einem einphasigen Netz. Wenn der Nullleiter bereits ausgeschaltet ist, aber die drei Phasenleiter noch nicht, so kann dies bei stark asymmetrischer Belastung der noch eingeschalteten Phasenleiter, die auch als Schieflast bezeichnet wird, zu einer Verschiebung des Potentials an einem Sternpunkt führen. In weiterer Folge kann es zu Überspannungsschäden kommen, da die Spannung zwischen dem am geringsten belasteten Phasenleiter und dem Sternpunkt nahezu den Wert der Spannung zwischen zwei Phasenleitern annehmen kann. Daher ist es bei einer bevorzugten Ausführungsform der erfindungsgemäßen Fehlerstromschutzeinrichtung vorgesehen, dass die Fehlerstromschutzeinrichtung so ausgelegt ist, dass beim Ausschalten des Nullleiter-Schaltkontakts dieser erst ausgeschaltet wird, wenn der mindestens eine Phasenleiter-Schaltkontakt bereits ausgeschaltet ist. Analog ist es bei einer bevorzugten Ausführungsform der erfindungsgemäßen Fehlerstromschutzeinrichtung vorgesehen, dass die Fehlerstromschutzeinrichtung so ausgelegt ist, dass beim Einschalten des mindestens einen Phasenleiter-Schaltkontakts dieser erst eingeschaltet wird, wenn der Nullleiter-Schaltkontakt bereits eingeschaltet ist.

Ebenso ist es bei einer bevorzugten Ausführungsform des erfindungsgemäßen Verfahrens vorgesehen, dass beim Ausschalten des Nullleiter-Schaltkontakts dieser erst ausgeschaltet wird, wenn der mindestens eine Phasenleiter-Schaltkontakt bereits ausgeschaltet ist. Weiters ist es bei einer bevorzugten Ausführungsform des erfindungsgemäßen Verfahrens vorgesehen, dass beim Einschalten des mindestens einen Phasenleiter-Schaltkontakts dieser erst eingeschaltet wird, wenn der Nullleiter-Schaltkontakt bereits eingeschaltet ist.

Neben Fehlerströmen können auch Fehlerzustände des Schutzleiters des Niederspannungsnetzes auftreten. Sei es, dass der Schutzleiter z.B. unterbrochen oder nicht mit dem Schutzleiter der Fehlerstromschutzeinrichtung verbunden ist. Oder, dass z.B. eine Fehlerspannung, insbesondere eine Phasenspannung am Schutzleiter anliegt, wenn beispielsweise eine Verkabelung falsch durchgeführt und der Schutzleiter mit einem Phasenleiter verwechselt wurde. Um letzteren Fehlerzustand, insbesondere in einem einphasigen Niederspannungsnetz, festzustellen, muss der auf lokalem Erdpotential befindliche Benutzer üblicherweise eine elektrisch leitende Sensorfläche berühren. Wenn der Benutzer die Sensorfläche jedoch irrtümlicherweise mit einem isolierenden Gegenstand berührt, beispielsweise weil der Benutzer Gummihandschuhe trägt, kann dies dazu führen, dass eine tatsächlich vorhandene Fehlerspannung am Schutzleiter nicht erkannt wird. Daher kann z.B. als weiterer Fehlerzustand das Berühren der Sensorfläche mit einem isolierenden Gegenstand erkannt werden.

Insbesondere bei dreiphasigen Niederspannungsnetzen besteht eine weitere Möglichkeit zur Feststellung von Fehlerspannungen am Schutzleiter darin, einen künstlichen Nullpunkt durch Zusammenschalten der drei Phasenleiter zu erzeugen. Der Schutzleiter bzw. eine an diesem anliegende Spannung kann dann mit dem künstlich erzeugten Nullpunkt verglichen werden. Wird eine Spannungsdifferenz festgestellt, die über einem vorgegebenen bzw. vorgebbaren Wert liegt, so kann dies als Fehlerzustand erkannt werden. Auf einen Sensor, der vom Benutzer berührt werden muss, kann in diesem Fall verzichtet werden.

Das Ein- und Ausschalten der Schaltkontakte kann nun selbstverständlich auch in Abhängigkeit der Detektion eines Fehlerzustands des Schutzleiters erfolgen. Vorzugsweise werden bei Erkennung eines solchen Fehlerzustands alle Schaltkontakte ausgeschaltet. Entsprechend ist es bei einer bevorzugten Ausführungsform der erfindungsgemäßen Fehlerstromschutzeinrichtung vorgesehen, dass die Fehlerstromschutzeinrichtung eine Erkennungsvorrichtung zur Erkennung von Fehlerzuständen des Schutzleiters des Niederspannungsnetzes umfasst, wobei die Fehlerstromschutzeinrichtung vorzugsweise so ausgelegt ist, dass bei Erkennung eines Fehlerzustands des Schutzleiters der mindestens eine Phasenleiter-Schaltkontakt, der Nullleiter-Schaltkontakt und der Schutzleiter-Schaltkontakt ausgeschaltet werden und/oder bleiben.

Um auch dann eine sichere Stromversorgung von elektrischen Betriebsmitteln zur Verfügung stellen zu können, wenn diese an unterschiedlichsten Orten, insbesondere auf Baustellen benutztwerden, ist es bei einer bevorzugten Ausführungsform der erfindungsgemäßen Fehlerstromschutzeinrichtung vorgesehen, dass es sich um eine ortsveränderliche Fehlerstromschutzeinrichtung handelt. Eine solche ortsveränderliche Fehlerstromschutzeinrichtung, die oft auch als PRCD bezeichnet wird, wird an der jeweiligen Baustelle mit dem dort vorhandenen Niederspannungsnetz verbunden. Indem die elektrischen Betriebsmittel, insbesondere Elektrowerkzeug wie Bohrmaschinen, Winkelschleifer etc. dann nur noch an das PRCD angeschlossen werden, ist eine maximale Sicherheit gewahrt.

Entsprechend ist für die sichere Stromversorgung von elektrischen Betriebsmitteln, insbesondere auf Baustellen, erfindungsgemäß ein System zur lokalen Bereitstellung von Wechselstrom vorgesehen, umfassend eine erfindungsgemäße Fehlerstromschutzeinrichtung, wobei der Schutzleiter der Fehlerstromschutzeinrichtung mit dem Schutzleiter des Niederspannungsnetzes elektrisch verbunden ist, wobei der Nullleiter der Fehlerstromschutzeinrichtung mit dem Nullleiter des Niederspannungsnetzes elektrisch verbunden ist und wobei der mindestens eine Phasenleiter der Fehlerstromschutzeinrichtung mitdem mindestens einen Phasenleiterdes Niederspannungsnetzes elektrisch verbunden ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Darstellung einer erfindungsgemäßen Fehlerstromschutzeinrichtung
- Fig. 2: eine schematische Darstellung einer weiteren Ausführungsform der erfindungsgemäßen Fehlerstromschutzeinrichtung mitdrei Phasenleitern

### WEGE ZUR AUSFÜHRUNG DER ERFINDUNG

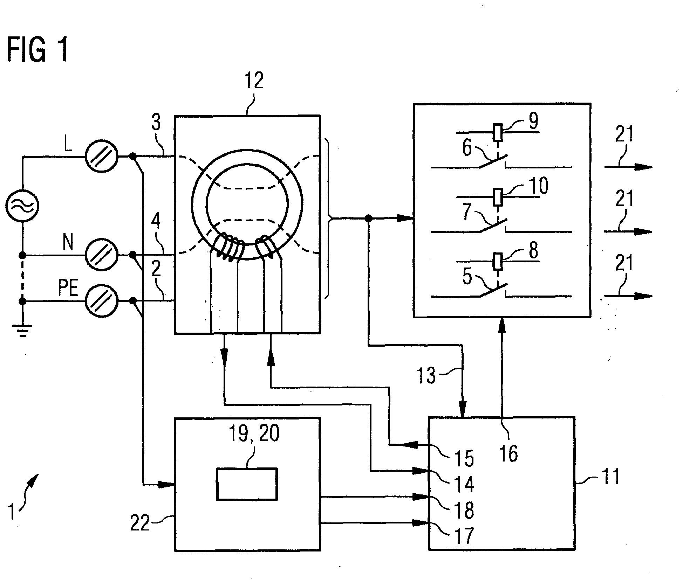

In der schematischen Darstellung der Fig. 1 ist eine erfindungsgemäße Fehlerstromschutzeinrichtung 1 für ein Niederspannungsnetz gezeigt, die an ein einphasiges Niederspannungsnetzangeschlossen ist. Dabei ist ein Schutzleiter 2 der Fehlerstromschutzeinrichtung 1 mit einem Schutzleiter PE des Niederspannungsnetzes verbunden, ein Nullleiter 4 der Fehlerstromschutzeinrichtung 1 mit einem Nullleiter N des Niederspannungsnetzes und ein Phasenleiter 3 der Fehlerstromschutzeinrichtung 1 mit einem Phasenleiter L des Niederspannungsnetzes.

Inden Schutzleiter 2 ist ein Schutzleiter-Schaltkontakt 5 geschaltet, um den Schutzleiter 2 ein- und ausschaltbar unterbrechen zu können. Analog ist in den Phasenleiter 3 ein Phasenleiter-Schaltkontakt 6 geschaltet, um den Phasenleiter 3 ein- und ausschaltbar unterbrechen zu können. Ebenso ist in den Nullleiter 4 ein Nullleiter-Schaltkontakt 7 geschaltet, um den Nullleiter 4 ein und ausschaltbar unterbrechen zu können. Die Schaltkontakte 5, 6, 7 sind mit weiterführenden Anschlüssen 21 elektrisch verbunden, über welche elektrische Betriebsmittel mit Spannung versorgt bzw. mit dem Schutzleiter 2, dem Phasenleiter 3 und dem Nullleiter 4 elektrisch verbunden werden können.

Zum Schalten des Schutzleiter-Schaltkontakts 5 ist ein Relais 8 vorgesehen, zum Schalten des Phasenleiter-Schaltkontakts 6 ein Relais 9 und zum Schalten des Nullleiter-Schaltkontakts 7 ein Relais 10. Die Relais 8, 9, 10 werden über eine Steuereinheit 11 angesteuert, die über Leitungen 13 mit Strom versorgt wird (in Fig. 1 ist aus Übersichtlichkeitsgründen nur eine Leitung eingezeichnet). Entsprechend weist die Steuereinheit 11 mindestens einen Ausgang 16 zur Ansteuerung der Relais 8, 9, 10 auf (in Fig. 1 ist aus Übersichtlichkeitsgründen nur ein solcher Ausgang eingezeichnet). Dabei ist die Fehlerstromschutzeinrichtung 1 bzw. die Steuereinheit 11 so ausgelegt, dass der Schutzleiter-Schaltkontakt 5 unabhängig vom Phasenleiter-Schaltkontakt 6 und vom Nullleiter-Schaltkontakt 7 geschaltet werden kann.

Zur Detektion eines Fehlerstroms weist die Fehlerstromschutzeinrichtung 1 einen Summenstromwandler 12 auf. Die Steuereinheit 11 weisteinen Eingang 14 für einen vom Summenstromwandler 12 kommenden Sekundärstrom auf. Dieser ist proportional zu einem Differenzstrom zwischen Phasenleiter L und Nullleiter N bzw. zwischen Phasenleiter 3 und Nullleiter 4. Liegt der Differenzstrom bzw. der Sekundärstrom über einem definierten Grenzwert, so steuert die Steuereinheit 11 die Relais 9, 10, um den Phasenleiter-Schaltkontakt 6 und den Nullleiter-Schaltkontakt 7 auszuschalten, sodass an den weiterführenden Anschlüssen 21 keine Spannung zur Verfügung steht.

Da das Relais 8 separat angesteuert wird, kann der Schutzleiter-Schaltkontakt 5 entweder eingeschaltet bleiben oder ebenfalls ausgeschaltet werden. Erfindungsgemäß wird der Schutzleiter-Schaltkontakt 5 gegenüber den Schaltkontakten 6, 7 um eine Verzögerungszeit zeitlich verzögert ausgeschaltet. Besonders bevorzugt kann die Verzögerungszeit über die Steuereinheit 11 vorgegeben werden bzw. ist diese einstellbar. Der Phasenleiter-Schaltkontakt 6 und der Nullleiter-Schaltkontakt 7 werden vorzugsweise gleichzeitig geschaltet. Um jedoch grundsätzlich auch Szenarien zu ermöglichen, in denen der Nullleiter-Schaltkontakt 7 gegenüber dem Phasenleiter-Schaltkontakt 6 voreilend oder verzögert geschaltet wird, ist der Nullleiter-Schaltkontakt 7 vorzugsweise unabhängig vom Phasenleiter-Schaltkontakt 6 schaltbar.

Um die Funktionsfähigkeit des Summenstromwandlers 12 überprüfen zu können, weist die Steuereinheit 11 einen Ausgang 15 auf, über welchen dem Summenstromwandler 12 ein Prüfstrom zugeführt werden kann, der über dem für den Differenzstrom definierten Grenzwert liegt. Bei funktionstüchtigem Summenstromwandler 12 muss dieser einen entsprechen hohen Sekundärstrom liefern, der über den Eingang 14 von der Steuereinheit 11 detektiert wird, woraufhin ein Fehlerzustand durch die Steuereinheit 11 erkannt wird und zumindest die Schalterkontakte 6, 7 ausgeschaltet werden.

Die Möglichkeit, den Schutzleiter-Schaltkontakt 5 unabhängig zu schalten, gestattet es außerdem, auch beim Einschalten sämtlicher Schaltkontakte 5, 6, 7 von einem gleichzeitigem Schalten aller Schaltkontakte 5, 6, 7 gezielt abzuweichen. Insbesondere kann der Schutzleiter-Schaltkontakt 5 den anderen Schaltkontakten 6, 7 um eine Voreilzeit voreilend eingeschaltet werden. Besonders bevorzugt kann die Voreilzeit über die Steuereinheit 11 vorgegeben werden bzw. ist diese einstellbar.

Schließlich weist die Fehlerstromschutzeinrichtung 1 im in Fig. 1 gezeigten Ausführungsbeispiel außerdem eine Erkennungsvorrichtung 22 zur Erkennung von Fehlerzuständen des Schutzleiters PE bzw. 2 auf. Dies kann z.B. dazu benutzt werden, bei der Verbindung der Fehlerstromschutzeinrichtung 1 mit dem Niederspannungsnetz zunächst den Schutzleiter PE auf Fehlerzustände zu prüfen. Werden keine Fehlerzustände festgestellt, wird der Schutzleiter-Schaltkontakt 5 grundsätzlich eingeschaltet. Vorzugsweise bleibt dann der Schutzleiter-Schaltkontakt 5 eingeschaltet, bis ein Fehlerzustand des Schutzleiters PE detektiert wird. Es versteht sich, dass bei Detektion eines Fehlerzustands des Schutzleiters PE bzw. 2 vorzugsweise nicht nur der Schutzleiter-Schaltkontakt 5, sondern auch der Phasenleiter-Schaltkontakt 6 und der Nullleiter-Schaltkontakt 7 ausgeschaltet und nicht wieder eingeschaltet werden, solange ein Fehlerzustand des Schutzleiters PE bzw. 2 detektiert wird.

Ein Fehlerzustand, der mittels der Erkennungsvorrichtung 22 detektierbar ist, ist das Vorliegen einer Fehlerspannung, insbesondere einer Phasenspannung am Schutzleiter PE bzw. 2. Hierzu weist die Erkennungsvorrichtung 22 einen Sensor 20 mit einer Sensorfläche aus leitfähigem Material auf, wobei der Sensor 20 im gezeigten Ausführungsbeispiel in eine Einschalttaste 19 der Fehlerstromschutzeinrichtung 1 integriert ist. Wird die Sensorfläche von einem auf Erdpotential befindlichen Benutzer berührt, so wird ein Fehler detektiert, wenn eine Spannungsdifferenz zum Schutzleiter PE bzw. 2 vorliegt, d.h. wenn der Schutzleiter PE bzw. 2 nicht auch auf Erdpotential liegt, sondern eine Fehlerspannung aufweist.

Weiters wird die Berührung des Sensors 20 mit einem isolierenden bzw. isolierten Gegenstand als Fehler erkannt, was zum Beispiel der Fall wäre, wenn der Benutzer die Einschalttaste 19 (und damit die Sensorfläche) mit Gummihandschuhen berührt. Es bestünde dann kein klar erkennbarer Unterschied zwischen einem korrekten lokalen Erdpotential und einer unzureichend leitenden Verbindung zwischen Sensorfläche und dem Benutzer, was dazu führte, dass eine vorhandene fehlerhafte Installation, bei welcher der PE-Leiter z.B. mit dem L-Leiter verbunden ist, nicht erkannt würde.

Entsprechend weist die Steuereinheit 11 einen Eingang 18 für die Erkennung eines Fehlerzustands des Schutzleiters PE bzw. 2 auf, über welchen Eingang 18 entsprechende Signale der Erkennungsvorrichtung 22 registriert werden. Außerdem weist die Steuereinheit 11 im Ausführungsbeispiel der Fig. 1 auch einen Eingang 17 zur Überwachung der Einschalttaste 19 auf. D.h. der Steuereinheit 11 liegt die Information vor, ob sich die Einschalttaste 19 in einer Ein- oder Aus-Position befindet.

Um auch die Berührung der Sensorfläche mit einem isolierten Gegenstand als Fehler erkennen zu können, wird bei einer, nicht im Detail dargestellten, bevorzugten Ausführungsform der Erkennungsvorrichtung 22 ein Prüfpotential aktiv an die Sensorfläche angelegt. Dieses Prüfpotential stammt aus einer hochohmigen Spannungsquelle und wird vom Benutzer bei Berührung auf dessen lokales Erdpotential gelegt. Der Innenwiderstand der Spannungsquelle und die Impedanz des Benutzers von Sensorfläche bis zu seinem lokalen Erdpotential bilden einen Spannungsteiler, dessen Ausgang mit einer Steuerelektrode eines Halbleiterschalters verbunden ist. Der Halbleiterschalter wiederum ist mit dem Schutzleiter PE des Niederspannungsnetzes bzw. mit dem Schutzleiter 2 verbunden. Weiters liegt am Halbleiterschalter eine erste Spannung an. Bei korrekten Erdungsverhältnissen ist die Spannung an der Steuerelektrode - genauer, zwischen Steuerelektrode und dem Schutzleiter PE bzw. 2 - so gering, dass der Halbleiterschalter nicht schaltet. Wenn es sich um einen normal sperrenden Halbleiterschalter handelt, bedeutet dies, dass der Halbleiterschalter nicht durchschaltet und trotz der ersten Spannung kein Strom durch den Halbleiterschalter fließt. Bei einem normal leitenden Halbleiterschalter hingegen, würde in diesem Fall Strom durch den Halbleiterschalter fließen, da dieser weiterhin durchschalten würde. Bei falschen' Erdungsverhältnissen, sei es dass am Schutzleiter PE bzw. 2 eine Fehlerspannung, insbesondere Phasenspannung anliegt oder dass der Benutzer die Sensorfläche miteinem isolierenden Gegenstand berührt, ist die Spannung am Ausgang des Spannungsteilers so hoch, dass zwischen der Steuerelektrode und dem Schutzleiter PE bzw. 2 eine Spannung anliegt, die höher als eine Schwellspannung des Halbleiterschalters ist, sodass der Halbleiterschalter schaltet. Wenn es sich um einen normal sperrenden Halbleiterschalter handelt, bedeutet dies, dass der Halbleiterschalter durchschaltet und aufgrund der ersten Spannung dann Strom durch den Halbleiterschalter fließt. Bei einem normal leitenden Halbleiterschalter hingegen, würde in diesem Fall kein Strom durch den Halbleiterschalter fließen, da dieser nicht mehr durchschalten würde. Indem also detektiert wird, ob der Halbleiterschalter schaltet oder nicht, kann zuverlässig ermittelt werden, ob Fehlerzustände in Form einer Fehlerspannung am Schutzleiter PE bzw. 2 und/oder in Form der Berührung der Sensorfläche mit einem isolierten Gegenstand vorliegen oder ob kein Fehler vorliegt, also korrekte Erdungsverhältnisse gegeben sind. Die erste Spannung vereinfacht diese Detektion, da das Durchschalten mit einem Stromfluss verbunden ist und daher lediglich detektiert werden muss, ob Strom fließt oder nicht. Es könnte jedoch prinzipiell auch lediglich die Spannung zwischen der Steuerelektrode und dem Schutzleiter PE bzw. 2 detektiert werden bzw. ob diese Spannung größer als eine bestimmte Spannung, wie z.B. die Schwellspannung des Halbleiterschalters, ist.

Schließlich ist ein weiterer durch die Erkennungsvorrichtung 22 in an sich bekannter Weise feststellbarer Fehlerzustand, dass der Schutzleiter PE nicht mit dem Schutzleiter 2 verbunden ist und/oder der Schutzleiter PE (oder der Schutzleiter 2) unterbrochen ist.

Es kann eine Statusanzeige (nicht dargestellt) vorgesehen sein, um den von der Steuereinheit 11 festgestellten Zustand anzuzeigen. Im einfachsten Fall kann dies beispielsweise mittels einer Leuchtdiode erfolgen, die lediglich anzeigt, ob irgendein Fehler vorliegt oder nicht.

Vorzugsweise werden bei Erkennung eines Fehlerzustands des Schutzleiters PE (oder des Schutzleiters 2) durch die Erkennungsvorrichtung 22 alle Schaltkontakte 5, 6, 7 ausgeschaltet und/oder bleiben ausgeschaltet.

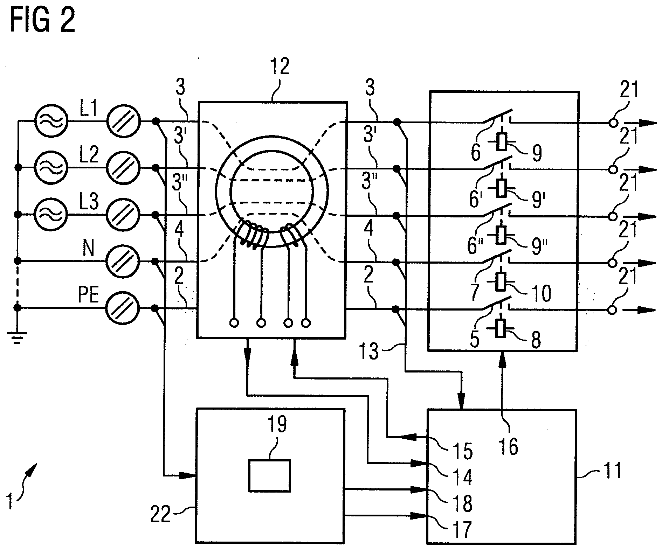

Fig. 2 zeigt eine weitere Ausführungsform der erfindungsgemäßen Fehlerstromschutzeinrichtung 1 für ein Niederspannungsnetz, die völlig analog zur in Fig. 1 gezeigten Ausführungsform aufgebaut ist, wobei das Niederspannungsnetz, mit dem die Fehlerstromschutzeinrichtung 1 verbunden ist, jedoch drei Phasenleiter L1, L2, L3 aufweist. Grundsätzlich funktioniert die in Fig. 2 gezeigte Ausführungsform der erfindungsgemäßen Fehlerstromschutzeinrichtung 1 völlig analog zur Ausführungsform der Fig. 1, weshalb auf eine detaillierte Beschreibung der Funktionalität im Wesentlichen verzichtet werden kann.

Aufgrund der drei Phasenleiter L1, L2, L3 sind drei Phasenleiter 3, 3', 3" der Fehlerstromschutzeinrichtung 1 und drei Phasenleiter-Schaltkontakte 6, 6', 6" vorgesehen. Für jeden der Phasenleiter-Schaltkontakte 6, 6', 6" wiederum ist ein Relais 9, 9', 9" zum Schalten vorgesehen, welche Relais 9, 9', 9" durch die Steuereinheit 11 angesteuert werden. Somit können die einzelnen Phasenleiter-Schaltkontakte 6, 6', 6" unabhängig von einander geschaltet werden. Beispielsweise kann nur einer der Phasenleiter-Schaltkontakte 6, 6', 6" eingeschaltet werden, während die anderen beiden der Phasenleiter-Schaltkontakte 6, 6', 6" ausgeschaltet bleiben.

Insbesondere bei mehrphasigen, vorzugsweise dreiphasigen Niederspannungsnetzen gemäß Fig. 2, kann sich die zeitliche Reihenfolge des Schaltens des Nullleiters 4 bzw. des Nullleiter-Schaltkontakts 7 und der Phasenleiter 3, 3', 3" bzw. der Phasenleiter-Schaltkontakte 6, 6', 6" deutlich stärker auswirken als in einem einphasigen Netz. Wenn der Nullleiter-Schaltkontakt 7 bereits ausgeschaltet ist, aber die drei Phasenleiter-Schaltkontakte 6, 6', 6" noch nicht, so kann dies bei stark asymmetrischer Belastung der noch eingeschalteten Phasenleiter 3, 3', 3", die auch als Schieflast bezeichnet wird, zu einer Verschiebung des Potentials an einem Sternpunkt führen, was in weiterer Folge Überspannungsschäden nach sich ziehen kann. Vorzugsweise wird daher beim Ausschalten des Nullleiter-Schaltkontakts 7 dieser erst ausgeschaltet, wenn die Phasenleiter-Schaltkontakte 6, 6', 6" bereits ausgeschaltet sind. Analog werden vorzugsweise beim Einschalten der Phasenleiter-Schaltkontakte 6, 6', 6" diese erst eingeschaltet, wenn der Nullleiter-Schaltkontakt 7 bereits eingeschaltet ist.

Die Fehlerstromschutzeinrichtung 1 in der Ausführungsform der Fig. 2 weist ebenfalls eine Erkennungsvorrichtung 22 zur Erkennung von Fehlerzuständen des Schutzleiters PE bzw. 2, insbesondere zur Erkennung von Fehlerspannungen am Schutzleiter PE bzw. 2, auf. Hierbei kann jedoch auf einen Sensor 20 verzichtet werden. Stattdessen wird durch Zusammenschalten der drei Phasenleiter 3, 3', 3" ein künstlicher Nullpunkt erzeugt. Eine am Schutzleiter PE bzw. 2 anliegende Spannung kann dann mit dem künstlich erzeugten Nullpunkt verglichen werden. Wird eine Spannungsdifferenz festgestellt, die über einem vorgegebenen bzw. vorgebbaren Wert liegt, so kann dies als Fehlerzustand von der Erkennungsvorrichtung 22 erkannt werden. Vorzugsweise werden bei Erkennung eines Fehlerzustands des Schutzleiters PE (oder des Schutzleiters 2) durch die Erkennungsvorrichtung 22 alle Schaltkontakte 5, 6, 6', 6", 7 ausgeschaltet und/oder bleiben ausgeschaltet.

### BEZUGSZEICHENLISTE

- 1: Fehlerstromschutzeinrichtung
- 2: Schutzleiter der Fehlerstromschutzeinrichtung
- 3, 3', 3": Phasenleiter der Fehlerstromschutzeinrichtung
- 4: Nullleiter der Fehlerstromschutzeinrichtung
- 5: Schutzleiter-Schaltkontakt
- 6, 6', 6": Phasenleiter-Schaltkontakt
- 7: Nullleiter-Schaltkontakt
- 8: Relais zum Schalten des SchutzleiterSchaltkontakts
- 9, 9', 9": Relais zum Schalten des PhasenleiterSchaltkontakts
- 10: Relais zum Schalten des NullleiterSchaltkontakts
- 11: Steuereinheit
- 12: Summenstromwandler
- 13: Stromversorgung der Steuereinheit
- 14: Eingang der Steuereinheit für einen Sekundärstrom vom Summenstromwandler
- 15: Ausgang der Steuereinheit für einen Prüfstrom zum Summenstromwandler
- 16: Ausgang der Steuereinheit zur Ansteuerung der Relais
- 17: Eingang der Steuereinheit für die Überwachung des Zustands der Einschalttaste
- 18: Eingang der Steuereinheitfür die Erkennung eines Fehlerzustands des Schutzleiters PE
- 19: Einschalttaste
- 20: Sensor
- 21: Weiterführender Anschluss
- 22: Erkennungsvorrichtung zur Erkennung von Fehlerzuständen des Schutzleiters PE
- L, L1, L2, L3: Phasenleiter des Niederspannungsnetzes
- N: Nullleiter des Niederspannungsnetzes
- PE: Schutzleiter des Niederspannungsnetzes

## Patentansprüche

1. Fehlerstromschutzeinrichtung (1) zur Erkennung von Fehlerströmen in einem Niederspannungsnetz mit einem Schutzleiter (PE), einem Nullleiter (N) und mindestens einem Phasenleiter (L; L1, L2, L3), die Fehlerstromschutzeinrichtung (1) umfassend einen Schutzleiter (2) zur elektrischen Verbindung mit dem Schutzleiter (PE) des Niederspannungsnetzes, einen Nullleiter (4) zur elektrischen Verbindung mit dem Nullleiter (N) des Niederspannungsnetzes und mindestens einen Phasenleiter (3, 3', 3'') zur elektrischen Verbindung mit dem mindestens einen Phasenleiter (L) des Niederspannungsnetzes, die Fehlerstromschutzeinrichtung (1) weiters umfassend einen Schutzleiter-Schaltkontakt (5) zur ein- und ausschaltbaren Unterbrechung des Schutzleiters (2) der Fehlerstromschutzeinrichtung (1), mindestens einen Phasenleiter-Schaltkontakt (6, 6', 6'') zur ein- und ausschaltbaren Unterbrechung des mindestens einen Phasenleiters (3, 3', 3'') der Fehlerstromschutzeinrichtung (1) und einen Nullleiter-Schaltkontakt (7) zur ein- und ausschaltbaren Unterbrechung des Nullleiters (4) der Fehlerstromschutzeinrichtung (1), wobei mindestens ein Schaltmittel (8, 9, 10) vorgesehen ist, um die Schaltkontakte (5, 6, 6', 6'', 7) zu schalten, wobei der Schutzleiter-Schaltkontakt (5) unabhängig vom Nullleiter-Schaltkontakt (7) und vom mindestens einen Phasenleiter-Schaltkontakt (6, 6', 6'') schaltbar ist, **dadurch gekennzeichnet, dass** die Fehlerstromschutzeinrichtung (1) so ausgelegt ist, dass beim Ausschalten des Schutzleiter-Schaltkontakts (5) und des Nullleiter-Schaltkontakts (7) und/oder des mindestens einen Phasenleiter-Schaltkontakts (6, 6', 6'') der Schutzleiter-Schaltkontakt (5) um eine festlegbare Verzögerungszeit verzögert gegenüber dem Nullleiter-Schaltkontakt (7) und/oder dem mindestens einen Phasenleiter-Schaltkontakt (6, 6', 6'') ausgeschaltet wird.

2. Fehlerstromschutzeinrichtung (1) nach Anspruch 1, **dadurch gekennzeichnet, dass** der Nullleiter-Schaltkontakt (7) unabhängig vom mindestens einen Phasenleiter-Schaltkontakt (6, 6', 6'') schaltbar ist.

3. Fehlerstromschutzeinrichtung (1) nach einem der Ansprüche 1 bis 2, **dadurch gekennzeichnet, dass** mehrere, vorzugsweise drei Phasenleiter (3, 3', 3'') der Fehlerstromschutzeinrichtung (1) und Phasenleiter-Schaltkontakte (6, 6', 6'') vorgesehen sind, die unabhängig voneinander schaltbar sind.

4. Fehlerstromschutzeinrichtung (1) nach einem der Ansprüche 1 bis 3, **dadurch gekennzeichnet, dass** für jeden Schaltkontakt (5, 6, 6', 6'', 7) ein eigenes Schaltmittel (8, 9, 9', 9'', 10) vorgesehen ist.

5. Fehlerstromschutzeinrichtung (1) nach einem der Ansprüche 1 bis 4, **dadurch gekennzeichnet, dass** die Fehlerstromschutzeinrichtung (1) so ausgelegt ist, dass beim Einschalten des Schutzleiter-Schaltkontakts (5) und des Nullleiter-Schaltkontakts (7) und/oder des mindestens einen Phasenleiter-Schaltkontakts (6, 6', 6'') der Schutzleiter-Schaltkontakt (5) um eine, vorzugsweise festlegbare Voreilzeit voreilend gegenüber dem Nullleiter-Schaltkontakt (7) und/oder dem mindestens einen Phasenleiter-Schaltkontakt (6, 6', 6'') eingeschaltet wird.

6. Fehlerstromschutzeinrichtung (1) nach einem der Ansprüche 1 bis 5, **dadurch gekennzeichnet, dass** die Fehlerstromschutzeinrichtung (1) so ausgelegt ist, dass der Nullleiter-Schaltkontakt (7) und der mindestens eine Phasenleiter-Schaltkontakt (6, 6', 6'') gleichzeitig geschaltet werden.

7. Fehlerstromschutzeinrichtung (1) nach einem der Ansprüche 1 bis 5, **dadurch gekennzeichnet, dass** die Fehlerstromschutzeinrichtung (1) so ausgelegt ist, dass beim Ausschalten des Nullleiter-Schaltkontakts (7) dieser erst ausgeschaltet wird, nachdem der mindestens eine Phasenleiter-Schaltkontakt (6, 6', 6'') ausgeschaltet ist.

8. Fehlerstromschutzeinrichtung (1) nach einem der Ansprüche 1 bis 5 und 7, **dadurch gekennzeichnet, dass** die Fehlerstromschutzeinrichtung (1) so ausgelegt ist, dass beim Einschalten des mindestens einen Phasenleiter-Schaltkontakts (6, 6', 6'') dieser erst eingeschaltet wird, wenn der Nullleiter-Schaltkontakt (7) bereits eingeschaltet ist.

9. Fehlerstromschutzeinrichtung (1) nach einem der Ansprüche 1 bis 8, **dadurch gekennzeichnet, dass** die Fehlerstromschutzeinrichtung (1) eine Erkennungsvorrichtung (22) zur Erkennung von Fehlerzuständen des Schutzleiters (PE) des Niederspannungsnetzes umfasst, wobei die Fehlerstromschutzeinrichtung (1) vorzugsweise so ausgelegt ist, dass bei Erkennung eines Fehlerzustands des Schutzleiters (PE) der mindestens eine Phasenleiter-Schaltkontakt (6, 6', 6''), der Nullleiter-Schaltkontakt (7) und der Schutzleiter-Schaltkontakt (5) ausgeschaltet werden und/oder bleiben.

10. Fehlerstromschutzeinrichtung (1) nach einem der Ansprüche 1 bis 9, **dadurch gekennzeichnet, dass** es sich um eine ortsveränderliche Fehlerstromschutzeinrichtung (1) handelt.

11. System zur lokalen Bereitstellung von Wechselstrom umfassend eine Fehlerstromschutzeinrichtung (1) nach einem der Ansprüche 1 bis 10, wobei der Schutzleiter (2) der Fehlerstromschutzeinrichtung (1) mit dem Schutzleiter (PE) des Niederspannungsnetzes elektrisch verbunden ist, wobei der Nullleiter (4) der Fehlerstromschutzeinrichtung (1) mit dem Nullleiter (N) des Niederspannungsnetzes elektrisch verbunden ist und wobei der mindestens eine Phasenleiter (3, 3', 3'') der Fehlerstromschutzeinrichtung (1) mit dem mindestens einen Phasenleiter (L; L1, L2, L3) des Niederspannungsnetzes elektrisch verbunden ist.

12. Verfahren zum Schalten von mindestens einem Phasenleiter-Schaltkontakt (6, 6', 6''), einem Nullleiter-Schaltkontakt (7) und einem Schutzleiter-Schaltkontakt (5) einer Fehlerstromschutzeinrichtung (1) zur Erkennung von Fehlerströmen in einem Niederspannungsnetz mit einem Schutzleiter (PE), einem Nullleiter (N) und mindestens einem Phasenleiter (L; L1, L2, L3), die Fehlerstromschutzeinrichtung (1) umfassend einen Schutzleiter (2) zur elektrischen Verbindung mit dem Schutzleiter (PE) des Niederspannungsnetzes, einen Nullleiter (4) zur elektrischen Verbindung mit dem Nullleiter (N) des Niederspannungsnetzes und mindestens einen Phasenleiter (3, 3', 3'') zur elektrischen Verbindung mit dem mindestens einen Phasenleiter (L) des Niederspannungsnetzes, wobei der Schutzleiter-Schaltkontakt (5) zur ein- und ausschaltbaren Unterbrechung des Schutzleiters (2) der Fehlerstromschutzeinrichtung (1) vorgesehen ist, wobei der mindestens eine Phasenleiter-Schaltkontakt (6, 6', 6'') zur ein- und ausschaltbaren Unterbrechung des mindestens einen Phasenleiters (3, 3', 3'') der Fehlerstromschutzeinrichtung (1) vorgesehen ist und wobei der Nullleiter-Schaltkontakt (7) zur ein- und ausschaltbaren Unterbrechung des Nullleiters (4) der Fehlerstromschutzeinrichtung (1) vorgesehen ist, wobei der Schutzleiter-Schaltkontakt (5) unabhängig vom Nullleiter-Schaltkontakt (7) und vom mindestens einen Phasenleiter-Schaltkontakt (6, 6', 6'') geschaltet wird, **dadurch gekennzeichnet, dass** beim Ausschalten des Schutzleiter-Schaltkontakts (5) und des Nullleiter-Schaltkontakts (7) und/oder des mindestens einen Phasenleiter-Schaltkontakts (6, 6', 6'') der Schutzleiter-Schaltkontakt (5) um eine festlegbare Verzögerungszeit verzögert gegenüber dem Nullleiter-Schaltkontakt (7) und/oder dem mindestens einen Phasenleiter-Schaltkontakt (6, 6', 6'') ausgeschaltet wird.

13. Verfahren nach Anspruch 12, **dadurch gekennzeichnet, dass** beim Einschalten des Schutzleiter-Schaltkontakts (5) und des Nullleiter-Schaltkontakts (7) und/oder des mindestens einen Phasenleiter-Schaltkontakts (6, 6', 6'') der Schutzleiter-Schaltkontakt (5) um eine, vorzugsweise festlegbare Voreilzeit voreilend gegenüber dem Nullleiter-Schaltkontakt (7) und/oder dem mindestens einen Phasenleiter-Schaltkontakt (6, 6', 6'') eingeschaltet wird.

## Claims

1. Fault-current protection device (1) for the detection of fault currents in a low-voltage network having a protective conductor (PE), a neutral conductor (N) and at least one phase conductor (L; L1, L2, L3), the fault-current protection device (1) comprising a protective conductor (2) for electrical connection to the protective conductor (PE) of the low-voltage network, a neutral conductor (4) for electrical connection to the neutral conductor (N) of the low-voltage network and at least one phase conductor (3, 3', 3") for electrical connection to the at least one phase conductor (L) of the low-voltage network, the fault-current protection device (1) further comprising a protective conductor switching contact (5) for the activatable and deactivatable interrupting of the protective conductor (2) of the fault-current protection device (1), at least one phase conductor switching contact (6, 6', 6") for the activatable and deactivatable interrupting of the at least one phase conductor (3, 3', 3") of the fault-current protection device (1) and a neutral conductor switching contact (7) for the activatable and deactivatable interrupting of the neutral conductor (4) of the fault-current protection device (1), wherein at least one switching means (8, 9, 10) is provided for switching the switching contacts (5, 6, 6', 6", 7), wherein the protective conductor switching contact (5) is switchable independently of the neutral conductor switching contact (7) and of the at least one phase conductor switching contact (6, 6', 6"), **characterized in that** the fault-current protection device (1) is designed such that when switching off the protective conductor switching contact (5) and the neutral conductor switching contact (7) and/or the at least one phase conductor switching contact (6, 6', 6") the protective conductor switching contact (5) is switched off with a definable delay time delayed with respect to the neutral conductor switching contact (7) and/or the at least one phase conductor switching contact (6, 6', 6").

2. Fault-current protection device (1) according to claim 1, **characterized in that** the neutral conductor switching contact (7) is switchable independently of the at least one phase conductor switching contact (6, 6', 6").

3. Fault-current protection device (1) according to one of the claims 1 to 2, **characterized in that** several, preferably three, phase conductors (3, 3', 3") of the fault-current protection device (1) and phase conductor switching contacts (6, 6', 6") are provided which are switchable independently of each other.

4. Fault-current protection device (1) according to one of the claims 1 to 3, **characterized in that** for each switching contact (5, 6, 6', 6", 7) a separate switching means (8, 9, 9', 9", 10) is provided.

5. Fault-current protection device (1) according to one of the claims 1 to 4, **characterized in that** the fault-current protection device (1) is designed so that when switching on the protective conductor switching contact (5) and the neutral conductor switching contact (7) and/or the at least one phase conductor switching contact (6, 6', 6") the protective conductor switching contact (5) is switched on by a preferably definable lead time in advancement with respect to the neutral conductor switching contact (7) and/or the at least one phase conductor switching contact (6, 6', 6").

6. Fault-current protection device (1) according to one of the claims 1 to 5, **characterized in that** the fault-current protection device (1) is designed so that the neutral conductor switching contact (7) and the at least one phase conductor switching contact (6, 6', 6") are switched simultaneously.

7. Fault-current protection device (1) according to one of the claims 1 to 5, **characterized in that** the fault-current protection device (1) is designed so that when switching off the neutral conductor switching contact (7) it is switched off only after the at least one phase conductor switching contact (6, 6', 6") is switched off.

8. Fault-current device (1) according to one of the claims 1 to 5 and 7, **characterized in that** the fault-current protection device (1) is designed so that when the at least one phase conductor switching contact (6, 6', 6") is switched on it is only switched on when the neutral conductor switching contact (7) is already switched on.

9. Fault-current device (1) according to one of the claims 1 to 8, **characterized in that** the fault-current protection device (1) comprises a detection device (22) for detecting fault conditions of the protective conductor (PE) of the low-voltage network, wherein the fault-current protection device (1) is preferably designed so that upon detection of a fault condition of the protective conductor (PE), the at least one phase conductor switching contact (6, 6', 6"), the neutral conductor switching contact (7) and the protective conductor switching contact (5) are and/or remain switched off.

10. Fault-current protection device (1) according to one of the claims 1 to 9, **characterized in that** it is a portable fault-current protection device (1).

11. System for the local provision of alternating current, comprising a fault-current protection device (1) according to one of the claims 1 to 10, wherein the protective conductor (2) of the fault-current protection device (1) is electrically connected to the protective conductor (PE) of the low-voltage network, wherein the neutral conductor (4) of the fault-current protection device (1) is electrically connected to the neutral conductor (N) of the low-voltage network, and wherein the at least one phase conductor (3, 3', 3") of the fault-current protection device (1) is electrically connected to the at least one phase conductor (L; L1, L2, L3) of the low-voltage network.

12. Method for switching at least one phase conductor switching contact (6, 6', 6"), a neutral conductor switching contact (7) and a protective conductor switching contact (5) of a fault-current protection device (1) for detecting fault currents in a low-voltage network with a protective conductor (PE), a neutral conductor (N) and at least one phase conductor (L; L1, L2, L3), the fault-current protection device (1) comprising a protective conductor (2) for electrical connection to the protective conductor (PE) of the low-voltage network, a neutral conductor (4) for electrical connection to the neutral conductor (N) of the low-voltage network and at least one phase conductor (3, 3', 3") for electrical connection to the at least one phase conductor (L) of the low-voltage network, wherein the protective conductor switching contact (5) is provided for the activatable and deactivatable interruption of the protective conductor (2) of the fault-current protection device (1), wherein the at least one phase conductor switching contact (6, 6', 6") is provided for the activatable and deactivatable interruption of the at least one phase conductor (3, 3', 3") of the fault-current protection device (1), and wherein the neutral conductor switching contact (7) is provided for the activatable and deactivatable interruption of the neutral conductor (4) of the fault-current protection device (1), wherein the protective conductor switching contact (5) is switched independently of the neutral conductor switching contact (7) and of the at least one phase conductor switching contact (6, 6', 6"), **characterized in that** when switching off the protective conductor switching contact (5) and the neutral conductor switching contact (7) and/or the at least one phase conductor switching contact (6, 6', 6") the protective conductor switching contact (5) is switched off with a definable delay time delayed with respect to the neutral conductor switching contact (7) and/or the at least one phase conductor switching contact (6, 6', 6'').

13. Method according to claim 12, **characterized in that** when switching on the protective conductor switching contact (5) and the neutral conductor switching contact (7) and/or the at least one phase conductor switching contact (6, 6', 6") the protective conductor switching contact (5) is switched on by a preferably definable lead time in advancement with respect to the neutral conductor switching contact (7) and/or the at least one phase conductor switching contact (6, 6', 6").

## Revendications

1. Dispositif de protection contre les courants de défaut (1) pour la détection des courants de défaut dans un réseau basse tension comportant un conducteur de protection (PE), un conducteur de neutre (N) et au moins un conducteur de phase (L ; L1, L2, L3), le dispositif de protection contre les courants de défaut (1) comprenant un conducteur de protection (2) pour la connexion électrique au conducteur de protection (PE) du réseau basse tension, un conducteur de neutre (4) pour la connexion électrique au conducteur de neutre (N) du réseau basse tension et au moins un conducteur de phase (3, 3', 3") pour la connexion électrique audit au moins un conducteur de phase (L) du réseau basse tension, le dispositif de protection contre les courants de défaut (1) comprenant en outre un contact de commutation de conducteur de protection (5) pour l'interruption activable et désactivable du conducteur de protection (2) du dispositif de protection contre les courants de défaut (1), au moins un contact de commutation de conducteur de phase (6, 6', 6") pour l'interruption activable et désactivable dudit au moins un conducteur de phase (3, 3', 3") du dispositif de protection contre les courants de défaut (1) et un contact de commutation de conducteur de neutre (7) pour l'interruption activable et désactivable du conducteur de neutre (4) du dispositif de protection contre les courants de défaut (1), au moins un moyen de commutation (8, 9, 10) étant prévu pour commuter les contacts de commutation (5, 6, 6', 6", 7), le contact de commutation de conducteur de protection (5) pouvant être commuté indépendamment du contact de commutation de conducteur de neutre (7) et dudit au moins un contact de commutation de conducteur de phase (6, 6', 6"), **caractérisé en ce que** le dispositif de protection contre les courants de défaut (1) est conçu de telle sorte que lorsque le contact de commutation de conducteur de protection (5) et le contact de commutation de conducteur de neutre (7) et/ou ledit au moins un contact de commutation de conducteur de phase (6, 6', 6") sont désactivés, le contact de commutation de conducteur de protection (5) est désactivé avec un temps de retard définissable par rapport au contact de commutation de conducteur de neutre (7) et/ou audit au moins un contact de commutation de conducteur de phase (6, 6', 6").

2. Dispositif de protection contre les courants de défaut (1) selon la revendication 1, **caractérisé en ce que** le contact de commutation de conducteur de neutre (7) peut être commuté indépendamment dudit au moins un contact de commutation de conducteur de phase (6, 6', 6").

3. Dispositif de protection contre les courants de défaut (1) selon l'une des revendications 1 à 2, **caractérisé en ce que** plusieurs, de préférence trois conducteurs de phase (3, 3', 3") du dispositif de protection contre les courants de défaut (1) et contacts de commutation de conducteur de phase (6, 6', 6") sont prévus, qui peuvent être commutés indépendamment l'un de l'autre.

4. Dispositif de protection contre les courants de défaut (1) selon l'une des revendications 1 à 3, **caractérisé en ce qu'**un moyen de commutation distinct (8, 9, 9', 9", 10) est prévu pour chaque contact de commutation (5, 6, 6', 6", 7).

5. Dispositif de protection contre les courants de défaut (1) selon l'une des revendications 1 à 4, **caractérisé en ce que** le dispositif de protection contre les courants de défaut (1) est conçu de telle sorte que, lorsque le contact de commutation de conducteur de protection (5) et le contact de commutation de conducteur de neutre (7) et/ou ledit au moins un contact de commutation de conducteur de phase (6, 6', 6") sont activés, le contact de commutation de conducteur de protection (5) est activé avec un temps d'avance, de préférence définissable, par rapport au contact de commutation de conducteur de neutre (7) et/ou audit au moins un contact de commutation de conducteur de phase (6, 6', 6").

6. Dispositif de protection contre les courants de défaut (1) selon l'une des revendications 1 à 5, **caractérisé en ce que** le dispositif de protection contre les courants de défaut (1) est conçu de telle sorte que le contact de commutation de conducteur de neutre (7) et ledit au moins un contact de commutation de conducteur de phase (6, 6', 6") sont commutés simultanément.

7. Dispositif de protection contre les courants de défaut (1) selon l'une des revendications 1 à 5, **caractérisé en ce que** le dispositif de protection contre les courants de défaut (1) est conçu de telle sorte que lorsque le contact de commutation neutre (7) est désactivé, il n'est désactivé qu'après que ledit au moins un contact de commutation de conducteur de phase (6, 6', 6") est désactivé.

8. Dispositif de protection contre les courants de défaut (1) selon l'une des revendications 1 à 5 et 7, **caractérisé en ce que** le dispositif de protection contre les courants de défaut (1) est conçu de telle sorte que lorsque ledit au moins un contact de commutation de conducteur de phase (6, 6', 6") est activé, il n'est activé que lorsque le contact de commutation de conducteur de neutre (7) est déjà activé.

9. Dispositif de protection contre les courants de défaut (1) selon l'une des revendications 1 à 8, **caractérisé en ce que** le dispositif de protection contre les courants de défaut (1) comprend un dispositif de détection (22) pour détecter des états de défaut du conducteur de protection (PE) du réseau basse tension, le dispositif de protection contre les courants de défaut (1) étant conçu de préférence de telle sorte que, lors de la détection d'un état de défaut du conducteur de protection (PE), ledit au moins un contact de commutation de conducteur de phase (6, 6', 6"), le contact de commutation de conducteur de neutre (7) et le contact de commutation de conducteur de protection (5) sont et/ou restent désactivés.

10. Dispositif de protection contre les courants de défaut (1) selon l'une des revendications 1 à 9, **caractérisé en ce qu'**il s'agit d'un dispositif de protection contre les courants de défaut mobile (1).

11. Système de fourniture locale de courant alternatif comprenant un dispositif de protection contre les courants de défaut (1) selon l'une des revendications 1 à 10, dans lequel le conducteur de protection (2) du dispositif de protection contre les courants de défaut (1) est connecté électriquement au conducteur de protection (PE) du réseau basse tension, le conducteur de neutre (4) du dispositif de protection contre les courants de défaut (1) est connecté électriquement au conducteur de neutre (N) du réseau basse tension et ledit au moins un conducteur de phase (3, 3', 3") du dispositif de protection contre les courants de défaut (1) est connecté électriquement audit au moins un conducteur de phase (L ; L1, L2, L3) du réseau basse tension.

12. Procédé de commutation d'au moins un contact de commutation de conducteur de phase (6, 6', 6"), d'un contact de commutation de conducteur de neutre (7) et d'un contact de commutation de conducteur de protection (5) d'un dispositif de protection contre les courants de défaut (1) pour la détection des courants de défaut dans un réseau basse tension comportant un conducteur de protection (PE), un conducteur de neutre (N) et au moins un conducteur de phase (L ; L1, L2, L3), le dispositif de protection contre les courants de défaut (1) comprenant un conducteur de protection (2) pour la connexion électrique au conducteur de protection (PE) du réseau basse tension, un conducteur de neutre (4) pour la connexion électrique au conducteur de neutre (N) du réseau basse tension et au moins un conducteur de phase (3, 3', 3") pour la connexion électrique audit au moins un conducteur de phase (L) du réseau basse tension, le contact de commutation de conducteur de protection (5) étant prévu pour l'interruption activable et désactivable du conducteur de protection (2) du dispositif de protection contre les courants de défaut (1), ledit au moins un contact de commutation de conducteur de phase (6, 6', 6") étant prévu pour l'interruption activable et désactivable dudit au moins un conducteur de phase (3, 3', 3") du dispositif de protection contre les courants de défaut (1) et le contact de commutation de neutre (7) étant prévu pour l'interruption activable et désactivable du conducteur de neutre (4) du dispositif de protection contre les courants de défaut (1), le contact de commutation de conducteur de protection (5) étant commuté indépendamment du contact de commutation de conducteur de neutre (7) et dudit au moins un contact de commutation de conducteur de phase (6, 6', 6"), **caractérisé en ce que** lorsque le contact de commutation de conducteur de protection (5) et le contact de commutation de conducteur de neutre (7) et/ou ledit au moins un contact de commutation de conducteur de phase (6, 6', 6") sont désactivés, le contact de commutation de conducteur de protection (5) est désactivé avec un temps de retard définissable par rapport au contact de commutation de conducteur de neutre (7) et/ou audit au moins un contact de commutation de conducteur de phase (6, 6', 6").

13. Procédé selon la revendication 12, **caractérisé en ce que** lorsque le contact de commutation de conducteur de protection (5) et le contact de commutation de conducteur de neutre (7) et/ou ledit au moins un contact de commutation de conducteur de phase (6, 6', 6") sont activés, le contact de commutation de conducteur de protection (5) est activé avec un temps d'avance, de préférence définissable, par rapport au contact de commutation de conducteur de neutre (7) et/ou audit au moins un contact de commutation de conducteur de phase (6, 6', 6").
